# EUROPEAN PATENT APPLICATION

(11) **EP 1 437 879 A1**
(43) Date of publication of application: **14.07.2004**
(21) Application number: 02752944.5
(22) Date of filing: 09.07.2002
(51) Int. Cl.: H04M 1/02

(54) **A KIND OF MOBILE TELEPHONE HAVING ROTATION DISPLAY SCREEN**

(30) Priority: 19.07.2001 CN 01231830; 08.08.2001 CN 01124035
(71) Applicant: Zhu, Zhanxin, Chaoyang District, Beijing 100026 (CN)
(72) Inventor: Zhu, Zhanxin, Chaoyang District, Beijing 100026 (CN)
(74) Representative: Köhler, Walter, Dr.-Ing.
(86) International application number: PCT/CN2002/000487
(87) International publication number: WO 2003/019911

(57) **Zusammenfassung**

Die vorliegende Erfindung stellt eine Art von Mobiltelefon mit einem drehenden Anzeigebildschirm bereit. Das Mobiltelefon umfasst einen Hauptkörper (11) und einen Anzeigebildschirm (12), wobei der Anzeigebildschirm (12) durch ein Verbindungsmittel mit dem Hauptkörper (11) verbunden ist und das Verbindungsmittel als die Mitte eines Kreises dient, so dass sich die Projektionsfläche des Anzeigebildschirms parallel in Bezug auf den Hauptkörper drehen könnte. Das vorliegende erfinderische Mobiltelefon mit einem drehbaren Anzeigebildschirm bewirkte, dass der Daumen und die restlichen Finger zur Mitte der Handfläche zeigen und die Breite des Aufklappens und Greifens des Objekts als bequemste Breite dient. Durch den drehenden Anzeigebildschirm wird nicht nur den Objekthaltegewohnheiten des Benutzers Genüge getan, sondern es wird auch die horizontale Größe des Anzeigebildschirms größer als die vertikale Größe davon gemacht, wodurch auch den Betrachtungsgewohnheiten des Benutzers Genüge getan wird.

## Description

### GEBIET DER ERFINDUNG

Die vorliegende Erfindung betrifft das Gebiet der Mobilkommunikation und insbesondere ein Mobiltelefon mit einem drehbaren Anzeigebildschirm.

### ALLGEMEINER STAND DER TECHNIK

Heutzutage ist der Anzeigebildschirm eines Mobilkommunikationsgeräts mit seinem Hauptkörper zusammengemacht (d.h., allen anderen Teilen außer dem Anzeigebildschirm). Dasselbe gilt auch für das Mobiltelefon, dessen Anzeigebildschirm nicht parallel in Bezug auf den Hauptkörper gedreht werden kann.

Bei der kontinuierlich zunehmenden Menge von Information und der Verbesserung der Unterhaltungsfunktionalität wünschen die Benutzer, dass die Größe des Anzeigebildschirms eines Mobiltelefons so groß als möglich ist. Im Allgemeinen ist die bequemste Breite eines Objekts, um es in der Handfläche einer Person zu halten, 4,5 cm bis 6,5 cm. Wenn die Breite eines Objekts größer als diese Größe ist, fühlt sich die Person nicht wohl, wenn sie das Objekt hält, und sie fühlt sich müde, wenn sie das Objekt für eine lange Zeit hält. Aus diesem Grund könnte der Anzeigebildschirm eines Mobiltelefons nur entlang der vertikalen "1" erweitert werden, um ihn zu vergrößern. Obwohl das Ergebnis der Vergrößerung des Anzeigebildschirms die Anforderung des Übertragens und Anzeigens von Information für den Benutzer erfüllt, während der Benutzer Netzfilme und -literaturprogramme durch das Mobiltelefon sieht, kann der Benutzer nicht die ganze Ansicht sehen, wie sonst, da die horizontale Größe geringer als die vertikale Größe ist, wodurch der Benutzer kein Vergnügen an dem Gesehenen erhält.

Auf dem heutigen Markt erscheint ein Mobiltelefon, das auf die Weise von Horizontal-"1"-Schrift angezeigt wird. Wenn der Anzeigebildschirm des Mobiltelefons betrachtet wird, kann er sich an die Betrachtungsgewohnheit des Benutzers für die größere Größe in der Horizontalen als in der Vertikalen, ein gemäßigtes Verhältnis zwischen der Länge und der Breite und gute Sicht anpassen. Die Verwendung dieser Art von Mobiltelefon macht es jedoch notwendig, es quer in der Hand zu halten oder es in die Hand zu klemmen, wobei dies über die bequemste Breite zum Halten eines Objekts in einer Hand hinausgeht. Und da ein Winkel zwischen der Hand, welche das Objekt hält, und dem Arm gebildet wird, würde man sich bei der Verwendung des Mobiltelefons sowohl unbequem als auch müde fühlen. Außerdem ist die Bedienung nicht praktisch, und die Sicherheit ist nicht gut.

### KURZDARSTELLUNG DER ERFINDUNG

Die vorliegende Erfindung stellt ein Mobiltelefon mit einem drehbaren Anzeigebildschirm bereit, um die Probleme, die nach dem Stand der Technik bestehen, zu überwinden. Die Erfindung kann den Anzeigebildschirm des Mobiltelefons so drehen, dass sowohl die Betrachtungsanforderungen für Benutzer erfüllt werden als auch der Benutzer das Mobiltelefon mit der bequemsten Breite und dem bequemsten Winkel halten kann.

Die vorliegende Erfindung stellt ein Mobiltelefon mit einem drehbaren Anzeigebildschirm bereit, wobei das Mobiltelefon einen Hauptkörper und einen Anzeigebildschirm umfasst, wobei der Anzeigebildschirm über ein Kopplungsmittel mit dem Hauptkörper gekoppelt ist und die Projektionsfläche des Anzeigebildschirms parallel in Bezug auf den Hauptkörper gedreht werden kann, wobei das Kopplungsmittel als die Achsen der Drehung des Anzeigebildschirms dient.

In der vorliegenden Erfindung befindet sich auf der Rückseite des Anzeigebildschirms ein extrusiver Zylinder 20 mit einer Rille 22 in seiner Längsseite. Auf dem oberen Abschnitt des Hauptkörpers des Mobiltelefons befindet sich ein konkaves - konkavwandiges - kreisförmiges Loch 23, auf dem sich eine vertikale Nut 24 zur Aufnahme einer Festkarte befindet. Das zuvor beschriebene Kopplungsmittel wird durch Einführen des Zylinders 20 des Anzeigebildschirms in das konkave kreisförmige Loch 23 gebildet.

Das Mobiltelefon mit einem drehbaren Anzeigebildschirm gemäß der vorliegenden Erfindung bewirkt, dass sich die Breite, welche zwischen dem Daumen und den anderen Fingern gebildet wird, zur Handfläche der Hand zum Halten eines Objekts die bequemste Breite faltet, und kann den Haltegewohnheiten des Benutzers Genüge tun. Und das Drehen des Anzeigebildschirms ermöglicht es, dass die horizontale Größe des Anzeigebildschirms größer als die vertikale Größe ist, wodurch den Betrachtungsgewohnheiten der Benutzer Genüge getan wird. Das Verwenden des Funktionstastknopfs in Form einer Computertastatur auf dem Hauptkörper des Mobiltelefons in Kombination mit dem Kommunikationsbetriebsfunktionstastendruck kann nicht nur an die Wählgewohnheiten der Benutzer anpassen, sondern auch die Geschwindigkeit des Netzbetriebs erhöhen.

### KURZE BESCHREIBUNG DER ZEICHNUNGEN

In Verbindung mit Ausführungsformen wird das Mobiltelefon mit einem drehbaren Anzeigebildschirm gemäß der vorliegenden Erfindung unter Bezugnahme auf die beiliegende Zeichnung beschrieben, wobei:
Figur 1 eine Vorderansicht eines Mobiltelefons mit einem drehbaren Anzeigebildschirm gemäß der vorliegenden Erfindung darstellt;
Figur 2 eine schematische Ansicht für den Fall eines Winkels von 90 Grad zwischen dem drehbaren Anzeigebildschirm und dem Hauptkörper eines Mobiltelefons gemäß der vorliegenden Erfindung darstellt;
Figur 3 eine Struktur des hinteren Abschnitts eines Anzeigebildschirms darstellt;
Figur 4 eine Seitenansicht des Anzeigebildschirms darstellt; und
Figur 5 eine Seitenansicht des Hauptkörpers darstellt.

### AUSFÜHRLICHE BESCHREIBUNG DER AUSFÜHRUNGSFORMEN DER ERFINDUNG

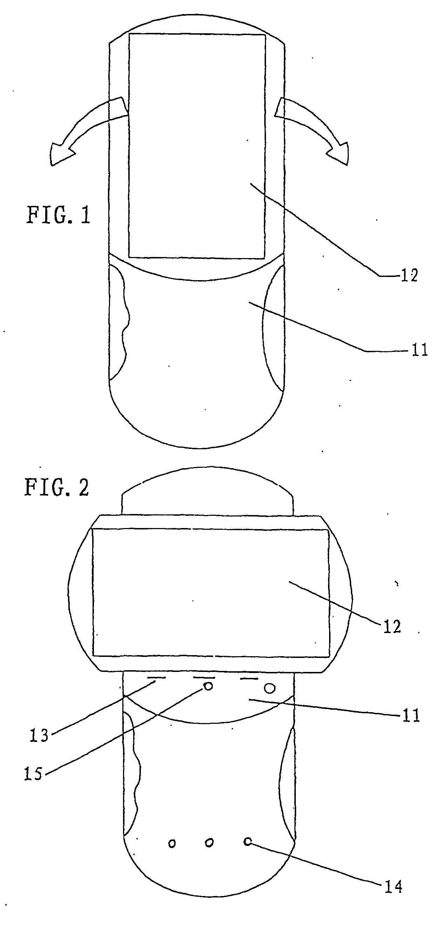

Ein Mobiltelefon mit einem drehbaren Anzeigebildschirm gemäß der vorliegenden Erfindung ist in Figur 1 dargestellt. Das Mobiltelefon besteht aus einem Anzeigebildschirm 12 und einem Hauptkörper 11. Die Erfindung unterscheidet sich vom Stand der Technik darin, dass der Anzeigebildschirm 12, anstatt auf dem Hauptkörper 11 fixiert zu sein, an den Hauptkörper 11 gekoppelt ist und mittels seines Kopplungsmittels parallel in Bezug auf den Hauptkörper gedreht werden kann, wie in Figur 2 dargestellt. Die relative Größe der horizontalen und vertikalen Größen des Anzeigebildschirms wird beim Drehen des Anzeigebildschirms ausgetauscht, da der Anzeigebildschirm aufrecht oder quer in Bezug auf den Hauptkörper 11 angeordnet werden kann.

Im Allgemeinen wird das Mobiltelefon gemäß der vorliegenden Erfindung auf dieselbe Weise wie bestehende normale Mobiltelefone verwendet. Nachdem die Fläche des Anzeigebildschirms um einen Winkel von 90 Grad parallel in Bezug auf den Hauptkörper gedreht ist, wechselt der Anzeigebildschirm von einem vertikalen Bildschirm auf einen horizontalen Bildschirm, dessen horizontale Größe größer als die vertikale Größe ist, wodurch er sich an die Betrachtungsgewohnheiten der Benutzer anpasst, wenn sie Netzfilme und - literaturprogramme sehen. Außerdem kann der Hauptkörper des Mobiltelefons als eine Plattform verwendet werden, auf welcher der Anzeigebildschirm durch verschiedene Anzeigebildschirme mit verschiedenen Spezifikationen gemäß den verschiedenen Gebrauchsanforderungen ersetzt werden kann, um an verschiedene Betrachtungsanforderungen angepasst zu werden. Da die Verwendung des Mobiltelefons gemäß der vorliegenden Erfindung die beste Art und Weise, ein Mobiltelefon zu halten, welche sich an die Konstruktionsprinzipien bezüglich des menschlichen Körpers anpasst, nicht verändert, können die Funktionen problemlos und zweckdienlich bedient werden.

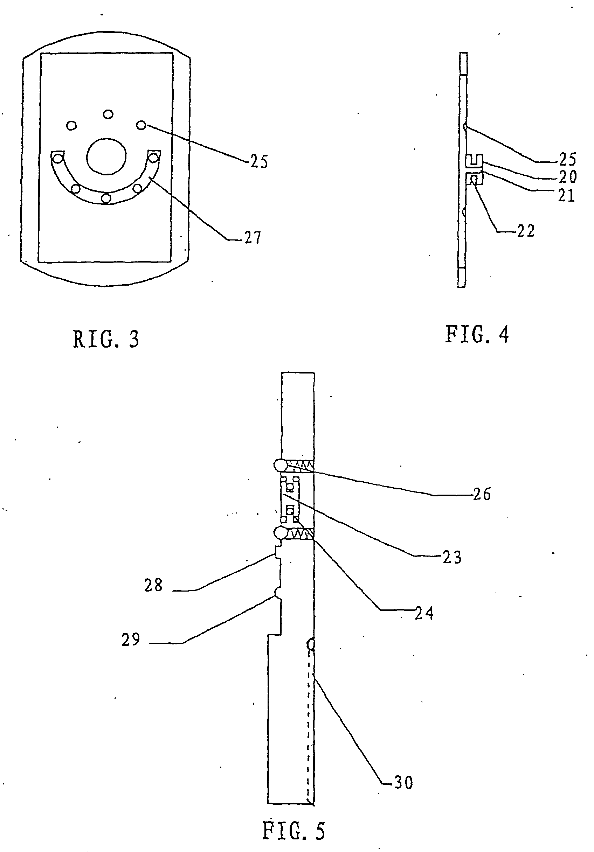

Nunmehr unter Bezugnahme auf Figur 3 bis 5 wird erklärt, wie sich der Anzeigebildschirm des Mobiltelefons parallel in Bezug auf den Hauptkörper dreht.

Unter Bezugnahme auf Figur 4 befindet sich ein extrusiver Zylinder 20 auf der Rückseite des Anzeigebildschirms 12, und es befindet sich ein Loch 21 im quer verlaufenden Abschnitt des extrusiven Zylinders 20. Der Anzeigebildschirm ist über das Loch 21 mit jedem der Systeme des Hauptkörpers verbunden. In der Längsseite des Zylinders 20 befindet sich eine Rille 22, welche zum Koppeln des Anzeigebildschirms an den Hauptkörper verwendet wird.

Unter Bezugnahme auf Figur 5 befindet sich auf dem oberen Abschnitt des Hauptkörpers des Mobiltelefons ein konkaves kreisförmiges Loch 23, auf welchem sich eine vertikale Nut 24 zur Aufnahme einer fixierten Karte befindet. Wenn der Zylinder 20 des Anzeigebildschirms in das konkave kreisförmige Loch 23 auf dem Hauptkörper des Mobiltelefons eingeführt wird, wird die Rille 22 des Zylinders 20 in die vertikale Nut des Hauptkörpers parallel dazu eingeführt und durch die fixierte Karte 24 fixiert, so dass der Anzeigebildschirm an den Hauptkörper des Mobiltelefons gekoppelt ist und in Bezug auf den Hauptkörper nur gedreht, aber nicht bewegt werden kann. Wenn er für eine bessere Sehwirkung durch einen größeren Anzeigebildschirm zu ersetzen ist, braucht nur die Feder der Festkarte ausgestoßen, der Anzeigebildschirm aus dem Hauptkörper des Mobiltelefons herausgezogen und dann ersetzt werden.

Damit der Anzeigebildschirm sich drehen und in einem bestimmten Winkel fixiert werden kann, befinden sich konkave Löcher 25 mit demselben Abstand zwischen einander um einen Kreis auf der Rückseite des Anzeigebildschirms herum. Mehrere halbvorspringende Federbälle 26 sind auf dem oberen Abschnitt des Hauptkörpers des Mobiltelefons angebracht. Wenn beim Drehen des Anzeigebildschirms die konkaven Löcher 25 auf der Rückseite des Anzeigebildschirms mit den halbvorspringenden Federbällen 26 auf dem Hauptkörper zusammenpassen, dann wird der Anzeigebildschirm blockiert.

In diesem Moment sieht die Figur, welche durch die Fläche des Anzeigebildschirms und die Fläche des Hauptkörpers des Mobiltelefons gebildet wird, wie der Buchstabe "T" oder der halbe Buchstabe T ("Γ") aus, um den Winkel von 90 Grad einzunehmen. Ob der Buchstabe "T" oder der halbe Buchstabe T ("Γ") dargestellt wird, hängt hauptsächlich von der spezifischen Position des Zylinders 20 auf der Rückseite des Anzeigebildschirms ab. Falls sich der Zylinder 20 nach Drehen des Anzeigebildschirms um 90 Grad im Mittelabschnitt der Rückseite des Anzeigebildschirms befindet, sieht die Figur, welche durch den Anzeigebildschirm und den Hauptkörper dargestellt wird, wie der Buchstabe "T" aus. Falls sich der Zylinder 20 nach Drehen des Anzeigebildschirms um 90 Grad am oberen Ende der Mittellinie der Rückseite des Anzeigebildschirms befindet, sieht die Figur, welche durch den Anzeigebildschirm und den Hauptkörper dargestellt wird, wie der halbe Buchstabe T ("Γ") aus. Wenn ein vollständiger Buchstabe "T" benötigt wird, muss der Anzeigebildschirm weiter nach oben bewegt werden. In diesem Fall wird eine vertikale Rille auf dem Hauptkörper benötigt, die mit Aufwärtsbewegung des Anzeigebildschirms übereinstimmt.

Beide Strukturen des Buchstabens "T" und halbes T ("Γ") passen sich nicht nur normal stehenden Mobiltelefonen, sondern auch den umklappbaren Mobiltelefonen (manchmal auch als aufklappbare Mobiltelefone bezeichnet) an. Der Anzeigebildschirm eines umklappbaren Mobiltelefons liegt den Bedienungsteilen des Hauptkörpers gegenüber. Die Form des Buchstabens "T" oder des halben Buchstabens T ("Γ") wird durch den Anzeigebildschirm und den Hauptkörper nach Drehen des Anzeigebildschirms um die Achsen, welche als die Verbindung zwischen dem Anzeigebildschirm und dem Hauptkörper dienen, gebildet. Eine der Projektionsflächen des Anzeigebildschirms kann gebildet werden, indem der Anzeigebildschirms nur parallel zum und in Bezug auf den Hauptkörper gedreht wird.

Die vorliegende Erfindung ist ferner verbessert, um zu verhindern, dass sich der Anzeigebildschirm um mehr als 90 Grad übermäßig nach links oder nach rechts dreht. Zu diesem Zweck ist eine Rille 27 in Form eines halbkreisförmigen Bogens auf der Rückseite des Anzeigebildschirms angeordnet, um mit dem Begrenzungsblock 28 auf dem Hauptkörper übereinzustimmen und den Anzeigebildschirm daran zu hindern, sich um mehr als 90 Grad übermäßig nach links oder nach rechts zu drehen. Das Betriebsprinzip dieser Anordnung ist, dass, wenn der Anzeigebildschirm um 90 Grad gedreht wird, der Endpunkt der Rille 27, welche sich in Form eines halbkreisförmigen Bogen auf der Rückseite des Anzeigebildschirms befindet, an den Begrenzungsblock auf dem Hauptkörper des Mobiltelefons stößt, was den Anzeigebildschirm daran hindert, sich weiter zu drehen, und wodurch der größtmögliche Drehwinkel des Anzeigebildschirms begrenzt wird.

Der Zeichendrehsteuerknopf 29 auf dem oberen Abschnitt des Hauptkörpers des Mobiltelefons ist für gewöhnlich in einem niedergedrückten Zustand. Wenn der Anzeigebildschirm nach Drehen um 90 Grad von einer vertikalen Position in eine horizontale Position wechselt, schaltet der Steuerknopf das Zeichendrehsystem des Bildschirms ein, während er automatisch aus dem niedergedrückten Zustand springt, wodurch er bewirkt, dass sich die ursprünglichen Zeichen automatisch um 90 Grad drehen und der Text in einem neuen Format angeordnet wird.

Gleichzeitig wird der verborgene Funktionstastknopf 13 in Form einer Computertastatur enthüllt. Der Vorteil davon ist, dass die Kommunikationsbetriebsfunktionsknöpfe für die Benutzer sichtbar gemacht werden, damit sie das Telefon mit den Knöpfen nach ihrem Geschmack zweckdienlich machen können. Der Funktionstastknopf 13 ist auf der Rückseite des Anzeigebildschirms verborgen. Diese Anordnung führt dazu, dass die Größe des Bildschirms nicht zunimmt, und verkleinert den Bereich, der durch den Betriebsfunktionsknopf 14 auf dem Vorderbereich eines Mobiltelefons eingenommen wird, so weit als möglich, um den Bereich des Anzeigebildschirms zu vergrößern. Wenn der Tastknopf 13 in Form einer Computertastatur angeklickt und berührt wird, macht die Anordnung auch den Netzbetrieb mit einem Mobiltelefon leicht und schnell. Die Betätigung von verhüllten und verborgenen Tasten oder Knöpfen durch Kombinieren der beiden Arten von Tasten oder Knöpfen kann nicht nur die Betriebsfunktionsanforderungen erfüllen, sondern auch vollen Gebrauch vom begrenzten Platz auf einem Mobiltelefon machen.

Und ein verborgener Fotografierkopf 15 ermöglicht sowohl Videokonferenzanschaltung als auch Videokommunikation. Ein verbundener Halter 30 kann das Mobiltelefon am Tisch in verschiedenen Winkeln halten, um bequem Video zu sehen.

Außerdem ist ein Fingerabdruckinformationsübertragungsmittel im Mobiltelefon eingebaut, so dass die Bedienung auf dem Gebiet von Finanz, Einkauf, Handel, Netz usw. sicherer wird.

Außerdem ist ein grünes Energiesparüberwachungssystem eingebaut, welches Solarenergiezellen mit Mitteln zum Abfühlen des Temperaturunterschieds um das Gehäuse des Mobiltelefons herum kombiniert.

Außerdem sind Mittel zur Wiedergabe von Kompaktmagnetplatten im Mobiltelefon eingebaut, welche vollen Gebrauch vom Raum der ursprünglichen Massivbatterie machen. Dies verbessert nicht nur die Speicherkapazität des Mobiltelefons, sondern verbessert nur die Unterhaltung.

Außerdem bewirken diebstahlsichere Mittel, dass das Mobiltelefon ein Alarmsignal ausgibt, sobald sich der Besitzer einen bestimmten Abstand davon entfernt, wodurch die Möglichkeit des Verlusts des Mobiltelefons erheblich verringert wird.

Das Mobiltelefon mit einem drehbaren Anzeigebildschirm gemäß der vorliegenden Erfindung ist für die Verbesserung des Endnetzbetriebs der Mobilkommunikation und das Videosehen in der Zukunft bestimmt. Es ist praktisch für den Gebrauch zu tragen, da der Anzeigebildschirm gemäß den Betrachtungsanforderungen von aufrecht auf quer umgeschaltet werden kann. Und der Hauptkörper des Mobiltelefons kann als technische Plattform verwendet werden, und zwar nicht nur, um den Anzeigebildschirm durch verschiedene Größen gemäß den verschiedenen Anforderungen zu ersetzen, sondern auch um über andere Erkennungsfunktionen zu verfügen.

Zusammenfassend gilt:

Die vorliegende Erfindung offenbart ein Mobiltelefon mit einem drehbaren Anzeigebildschirm, wobei das Mobiltelefon einen Hauptkörper (11) und einen Anzeigebildschirm (12) umfasst, der Anzeigebildschirm (12) über Kopplungsmittel an den Hauptkörper (11) gekoppelt ist und sich die Projektionsfläche des Anzeigebildschirms parallel in Bezug auf den Hauptkörper drehen kann, wenn das Kopplungsmittel als eine Drehachse dient. Das Mobiltelefon mit einem drehbaren Anzeigebildschirm gemäß der vorliegenden Erfindung bewirkt, dass sich die Breite, welche zwischen dem Daumen und den anderen Fingern gebildet wird, zur Handfläche der Hand zum Halten eines Objekts die bequemste Breite faltet, und kann den Haltegewohnheiten der Benutzer Genüge tun. Und das Drehen des Anzeigebildschirms ermöglicht es, dass die horizontale Größe des Anzeigebildschirms größer als die vertikale Größe ist, wodurch den Betrachtungsgewohnheiten der Benutzer Genüge getan wird.

## Patentansprüche

1. Mobiltelefon mit einem drehbaren Anzeigebildschirm, umfassend einen Hauptkörper und einen Anzeigebildschirm, wobei der Anzeigebildschirm über Kopplungsmittel an den Hauptkörper gekoppelt ist und sich die Projektionsfläche des Anzeigebildschirms in parallele Ausrichtung in Bezug auf den Hauptkörper drehen kann, wobei das Kopplungsmittel als die Achsen der Drehung des Anzeigebildschirms dient.

2. Mobiltelefon nach Anspruch 1, wobei sich auf der Rückseite des Anzeigebildschirms ein extrusiver Zylinder (20) befindet und sich in seiner Längsseite eine Rille (22) befindet; sich auf dem oberen Abschnitt des Hauptkörpers des Mobiltelefons ein konkaves kreisförmiges Loch (23) befindet, auf welchem sich eine vertikale Nut (24) zur Aufnahme einer fixierten Karte befindet; und das Kopplungsmittel durch Einführen des Zylinders (20) des Anzeigebildschirms in das konkave kreisförmige Loch (23) gebildet ist.

3. Mobiltelefon nach Anspruch 2, wobei sich in der Querrichtung des Zylinders (20) ein Loch (21) befindet und der Anzeigebildschirm über das Loch mit jedem der Systeme des Hauptkörpers verbunden ist.

4. Mobiltelefon nach Anspruch 1, wobei Anzeigebildschirme von verschiedenen Größen den einen auf dem Hauptkörper ersetzen können.

5. Mobiltelefon nach Anspruch 2, wobei sich konkave Löcher (25) mit demselben Abstand zwischen einander um einen Kreis auf der Rückseite des Anzeigebildschirms herum befinden; mehrere halbvorspringende Federkugeln (26) auf dem oberen Abschnitt des Hauptkörpers des Mobiltelefons angebracht sind; und der Anzeigebildschirm dann in einem bestimmten Winkel blockiert wird, wenn bei Drehen des Anzeigebildschirms die konkaven Löcher (25) auf der Rückseite des Anzeigebildschirms mit den halbvorspringenden Federkugeln (26) auf dem Hauptkörper übereinstimmen, dann ist der Anzeigebildschirm in einem bestimmten Winkel gesichert.

6. Mobiltelefon nach Anspruch 5, wobei sich eine Rille (27) in Form eines halbkreisförmigen Bogens auf der Rückseite des Anzeigebildschirms befindet, welche so ausgelegt ist, dass sie mit dem Begrenzungsblock (28) auf dem Hauptkörper übereinstimmt und den Anzeigebildschirm daran hindert, sich um mehr als 90 Grad nach links oder nach rechts hinausgehend zu drehen.

7. Mobiltelefon nach Anspruch 1, wobei sich ein Zeichendrehsteuerknopf (29) auf dem Hauptkörper befindet.

8. Mobiltelefon nach Anspruch 1, wobei ein Funktionstastknopf (13) in Form einer Computertastatur auf dem Hauptkörper vorgesehen ist und der Funktionstastknopf (13) nach Drehen des Anzeigebildschirms enthüllt wird.

9. Mobiltelefon nach Anspruch 1, wobei ein verborgener Fotografierkopf (15) auf dem Hauptkörper vorgesehen ist.

10. Mobiltelefon nach Anspruch 1, wobei sich ein Halter (30) auf der Rückseite des Hauptkörpers befindet.
